# EUROPEAN PATENT APPLICATION

(11) **EP 4 099 778 A1**
(43) Date of publication of application: **07.12.2022**
(21) Application number: 20916848.3
(22) Date of filing: 28.01.2020
(51) Int. Cl.: H04W 72/04, H04W 72/12

(54) **TERMINAL, RADIO COMMUNICATION METHOD, AND BASE STATION**

(71) Applicant: NTT DOCOMO, INC., Chiyoda-Ku Tokyo 100-6150 (JP)
(72) Inventor: TAKAHASHI, Yuki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2020/003019
(87) International publication number: WO 2021/152702

(57) **Abstract**

A terminal according to an aspect of the present disclosure includes: a receiving section that receives at least one of first information related to an invalid symbol pattern for transmission of an uplink shared channel, second information indicating whether or not an indication field for presence/absence of application of the first information is configured in downlink control information, and the indication field included in the downlink control information; and a control section that controls transmission of a configured grant-based uplink shared channel, based on at least one of the first information, the second information, and the indication field included in the downlink control information.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In existing LTE systems (for example, 3GPP Rel. 8 to Rel. 14), a user terminal (User Equipment (UE)) transmits uplink control information (UCI) by using at least one of a UL data channel (for example, a Physical Uplink Shared Channel (PUSCH)) and a UL control channel (for example, a Physical Uplink Control Channel (PUCCH)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In 3GPP Rel. 15, repeated transmissions are supported for a UL data channel (for example, a PUSCH). The UE performs such control as to transmit a PUSCH over a plurality of slots (for example, K consecutive slots), based on a repetition factor K configured by a network (for example, a base station). In other words, in a case of performing repeated transmissions, each PUSCH is transmitted in a different slot (for example, on a slot-by-slot basis).

Meanwhile, for Rel. 16 and later versions, it is studied to perform a plurality of PUSCH transmissions within a single slot in a case of performing repeated transmissions of a PUSCH. In other words, each PUSCH is transmitted in a unit shorter than a slot (for example, on a subslot-by-subslot basis or a mini-slot-by-mini-slot basis).

In this case, it is assumed that a symbol(s) (for example, a DL symbol(s) and the like) that cannot be used for the PUSCH transmissions is included in the slot. It is also studied to notify, in such a case, the UE of information related to the symbol(s) (or a symbol pattern) that cannot be used for the PUSCH transmissions by using at least one of higher layer signaling and downlink control information (for example, DCI).

Meanwhile, for the PUSCH transmissions, dynamic grant-based PUSCH transmission, which is scheduled dynamically by DCI, and configured grant-based PUSCH transmission, which is semistatically configured by higher layer signaling, are supported. It is not sufficiently studied how to control, in this case, indication of a symbol pattern (for example, an invalid symbol pattern) that cannot be used for the transmission, for dynamic grant-based PUSCH transmission or the configured grant-based PUSCH transmission.

Thus, an object of the present disclosure is to provide a terminal, a radio communication method, and a base station which can appropriately control transmission even in a case of performing repeated transmissions by using a unit shorter than a slot.

### Solution to Problem

A terminal according to an aspect of the present disclosure includes: a receiving section that receives at least one of first information related to an invalid symbol pattern for transmission of an uplink shared channel, second information indicating whether or not an indication field for presence/absence of application of the first information is configured in downlink control information, and the indication field included in the downlink control information; and a control section that controls transmission of a configured grant-based uplink shared channel, based on at least one of the first information, the second information, and the indication field included in the downlink control information.

### Advantageous Effects of Invention

According to an aspect of the present disclosure, it is possible to appropriately control transmission even in a case of performing repeated transmissions by using a unit shorter than a slot.

### Brief Description of Drawings

FIGS. 1A and 1B are each a diagram to show an example of repeated transmissions of a PUSCH;
FIG. 2 is a diagram to show another example of the repeated transmissions of a PUSCH;
FIG. 3 is a diagram to show an example of control of repeated transmissions of a configured grant-based PUSCH;
FIG. 4 is a diagram to show another example of the control of repeated transmissions of a configured grant-based PUSCH;
FIGS. 5A and 5B are each a diagram to show another example of the control of repeated transmissions of a configured grant-based PUSCH;
FIG. 6 is a diagram to show an example of a schematic structure of a radio communication system according to one embodiment;
FIG. 7 is a diagram to show an example of a structure of a base station according to one embodiment;
FIG. 8 is a diagram to show an example of a structure of a user terminal according to one embodiment; and
FIG. 9 is a diagram to show an example of a hardware structure of the base station and the user terminal according to one embodiment.

### Description of Embodiments

### (Repeated Transmissions)

In Rel. 15, repeated transmissions are supported in data transmission. For example, a base station (a network (NW) or a gNB) repeatedly performs transmission of DL data (for example, a downlink shared channel (PDSCH)) a certain number of times. Alternatively, a UE repeatedly performs UL data (for example, an uplink shared channel (PUSCH)) a certain number of times.

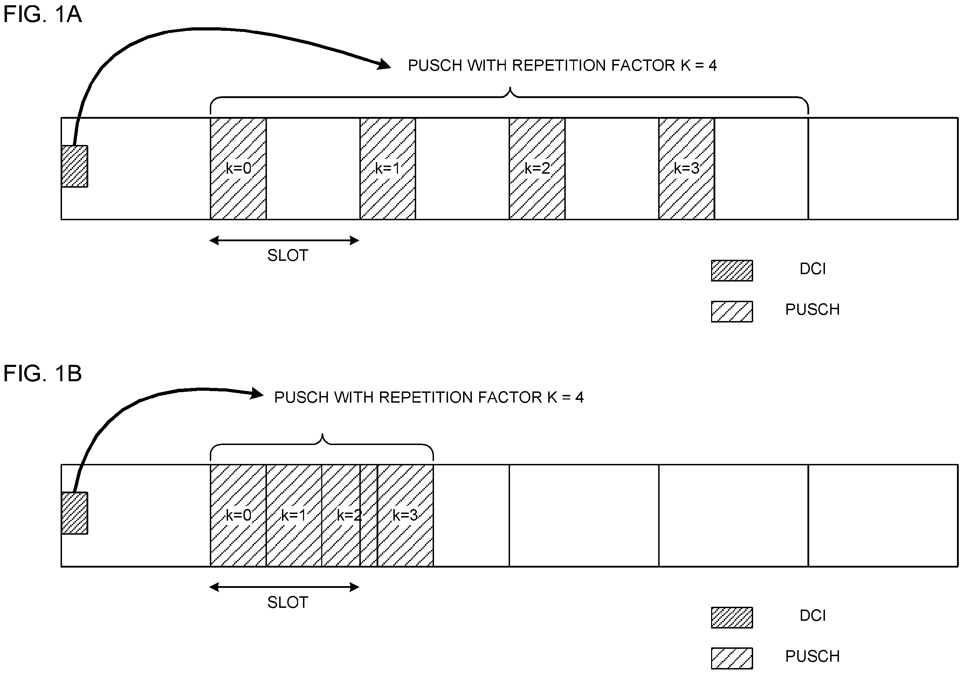

FIG. 1A is a diagram to show an example of repeated transmissions of a PUSCH. FIG. 1A shows an example in which a PUSCH is scheduled for a certain number of repetitions by a single piece of DCI. The number of repetitions may also be referred to as a repetition factor K or an aggregation factor K.

Although the repetition factor K is 4 (repetition factor K = 4) in FIG. 1A, the value of K is not limited thereto. The n-th repetition is also referred to as an n-th transmission occasion and the like and may be identified by a repetition index k (0 ≤ k ≤ K - 1). Although repeated transmissions of a PUSCH (for example, a dynamic grant-based PUSCH) dynamically scheduled by DCI is shown in FIG. 1A, this embodiment may be applied to repeated transmissions of a configured grant-based PUSCH.

For example, in FIG. 1A, the UE receives information indicating the repetition factor K (for example, aggregationFactorUL or aggregationFactorDL) through higher layer signaling. Here, for example, the higher layer signaling may be any one or combinations of RRC (Radio Resource Control) signaling, MAC (Medium Access Control) signaling, broadcast information, and the like.

For example, the MAC signaling may use MAC control elements (MAC CEs), MAC PDUs (Protocol Data Units), and the like. For example, the broadcast information may be master information blocks (MIBs), system information blocks (SIBs), minimum system information (RMSI (Remaining Minimum System Information)), and the like.

The UE controls reception processing (for example, at least one of reception, demapping, demodulation, and decoding) of a PDSCH or transmission processing (for example, at least one of transmission, mapping, modulation, and coding) or transmission processing (for example, at least one of transmission, mapping, modulation, and coding) of a PUSCH, in each of K consecutive slots based on at least one of the following field values (or information indicated by the field value(s)) in DCI:
- allocation of a time-domain resource (for example, a start symbol, the number of symbols in each slot, or the like);
- allocation of a frequency-domain resource (for example, a certain number of resource blocks (RBs)) or a certain number of resource block groups (RBGs);
- modulation and coding scheme (MCS) index;
- configuration of a demodulation reference signal (DMRS) of a PDSCH; and
- state of transmission configuration indication (or Transmission Configuration Indicator) (TCI) (TCI state (TCI-state)).

The same symbol allocation may be applied among the K consecutive slots. FIG. 1A shows a case where the PUSCH in each slot is allocated to a certain number of symbols from the beginning of the slot. The same symbol allocation among the slots may be determined as in a manner described for the time-domain resource allocation above.

For example, the UE may determine symbol allocation in each slot, based on the start symbol S and the number L of symbols determined based on a value m of a certain field (for example, a TDRA field) in the DCI. Note that the UE may determine the first slot, based on K2 information determined based on the value m of a certain field (for example, the TDRA field) in the DCI.

Meanwhile, redundancy versions (RVs) applied to TBs based on the same data may be the same or at least partially different from each other among the K consecutive slots. For example, an RV applied to the TBs in an n-th slot (transmission occasion or repetition) may be determined based on a value of a certain field (for example, an RV field) in the DCI.

In a case where the resource allocated in each of the K consecutive slots is different in communication direction from the UL, DL, or flexible of the slot specified by at least one of uplink/downlink communication direction indication information for TDD control (for example, an RRC IE "TDD-UL-DL-ConfigCommon" or "TDD-UL-DL-ConfigDedicated") and a slot format indicator of DCI (for example, DCI format 2_0), in at least one symbol, it may be assumed that transmission (or reception) is not performed in the resource of the slot including the symbol.

In Rel. 15, repeated transmissions of a PUSCH are performed over a plurality of slots (on a slot-by-slot basis) as shown in FIG. 1A. However, it is assumed in Rel. 16 and later versions that repeated transmissions of a PUSCH are performed in a unit shorter than a slot (for example, on a subslot-by-subslot basis, on a mini-slot-by-mini-slot basis, or in a unit of a certain number of symbols) (refer to FIG. 1B).

For example, the UE performs a plurality of PUSCH transmissions within one slot. In a case where repeated transmissions are performed on a subslot-by-subslot basis, there may occur a case in which a certain transmission of a plurality of repeated transmissions crosses a slot-boundary, depending on the number of repeated transmissions (for example, K), the unit of data allocation (the data length of each repeated transmission), and the like. In FIG. 1B, a PUSCH of k = 2 is mapped over a slot-boundary. In this case, the PUSCH may be divided (or segmented) with reference to the slot-boundary for transmission.

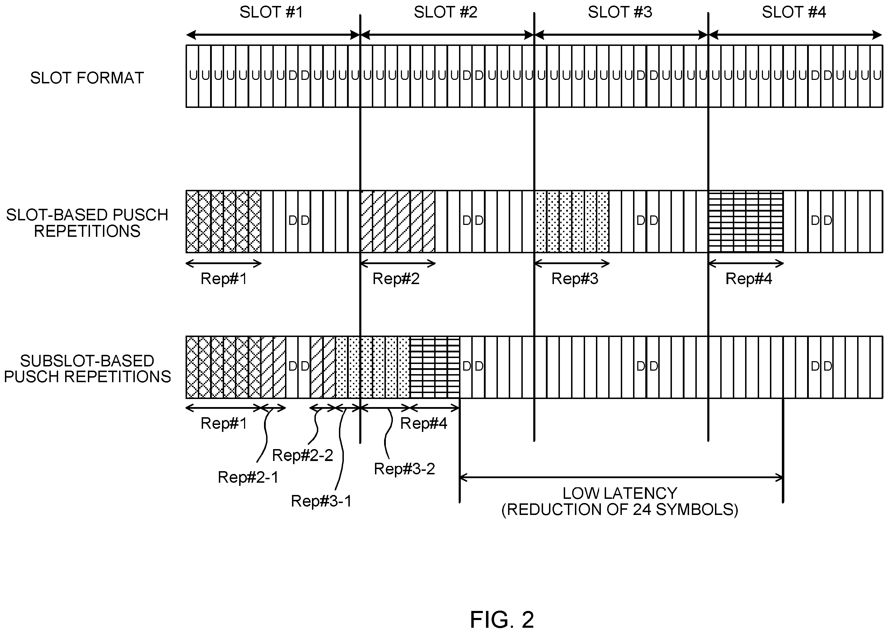

A case is also assumed that a symbol(s) (for example, a DL symbol(s) and the like) that cannot be used for PUSCH transmissions is included in the slot. In this case, it is assumed that the PUSCH transmissions are performed by using the symbols obtained by excluding the DL symbol(s). For example, in a case where a DL symbol is included as the middle symbol among the symbols to which a certain PUSCH is allocated, PUSCH transmissions may be performed so as not to allocate the PUSCH to the part corresponding to the DL symbol. In this case, the PUSCH may be divided (or segmented) (refer to FIG. 2).

FIG. 2 shows a case in which the PUSCH of k = 1 (Rep #2) is divided into two (Reps #2-1 and #2-2) by DL symbols and the PUSCH of k = 2 (Rep #3) is divided into two (Reps #3-1 and #3-2) by a slot-boundary, in subslot-based repeated transmissions. Note that such subslot-based repeated transmissions as those shown in FIG. 2 may be referred to as repeated transmissions type B (for example, PUSCH repetition Type B).

By performing repeated transmissions of a PUSCH in a subslot-based manner, it is possible to complete the repeated transmissions of the PUSCH earlier than a case of performing repeated transmissions on a slot-by-slot basis.

Although FIG. 2 shows a case where UL symbols (U) and DL symbols (D) are notified as slot formats, other formats (for example, flexible symbols (F) for each of which a DL or UL symbol is not explicitly specified) may be notified. The UE may perform UL transmission or DL transmission, or perform a specific operation (may be restricted in terms of the specific operation) in each flexible symbol.

It is also studied to notify, in a case of applying repeated transmission type B, the UE of information related to the symbol(s) (or a symbol pattern) that cannot be used for PUSCH transmissions. The symbol pattern that cannot be used for PUSCH transmissions may be referred to as an invalid symbol pattern and the like.

It is studied to provide an indication of the invalid symbol pattern by using at least one of higher layer signaling and DCI, for repeated transmissions of a dynamic grant-based PUSCH dynamically scheduled by the DCI. The DCI may be a certain DCI format (for example, at least one of DCI formats 0_1 and 0_2).

For example, the UE is notified of the information related to the invalid symbol pattern that cannot be used for PUSCH transmissions, by using a first higher layer parameter. The UE may be notified of presence/absence of application of information related to the invalid symbol pattern by using the DCI. In this case, a bit field (an indication field for presence/absence of invalid symbol pattern application) for indicating presence/absence of application of the information related to the invalid symbol pattern may be configured in the DCI.

The UE may be notified of presence/absence of a configuration of the indication field (or an additional bit(s)) in the DCI by using a second higher layer parameter. In other words, in a case where the UE is notified of the information related to the invalid symbol pattern through the first higher layer parameter, the UE may determine whether application of the information related to the invalid symbol pattern is present/absent, based on the second higher layer parameter and the DCI.

For example, in a case where the UE is not notified of or configured with the first higher layer parameter, the UE controls transmissions of a PUSCH without taking the invalid symbol pattern into account. For example, a symbol(s) notified as a flexible symbol(s) (F) through higher layer signaling or the like may be used for PUSCH transmissions as a slot format. In this case, segmenting of the PUSCH may be controlled based on at least one of a DL symbol(s) and a slot-boundary. In a case where a symbol(s) notified as a DL symbol(s) is included in the symbols to which the PUSCH is allocated, the UE performs such control as not to use the symbol(s) for the PUSCH transmission.

In a case where the UE is notified of or configured with the first higher layer parameter, the UE determines whether application of the invalid symbol pattern is present/absent, based on the second higher layer parameter and the DCI. For example, in a case where addition of an additional bit(s) (or a certain field) indicating presence/absence of application of the invalid symbol pattern to the DCI is indicated by the second higher layer parameter, the UE determines whether the application of the invalid symbol pattern is present/absent based on the certain field.

For example, in a case where the certain field in the DCI is a first value (for example, 0), this may indicate that the invalid symbol pattern notified by the first higher layer parameter is not applied. In this case, the UE controls transmissions of the PUSCH without taking the invalid symbol pattern information into account. For example, a symbol(s) notified as a flexible symbol(s) (F) through higher layer signaling or the like may be used for PUSCH transmissions as a slot format. In this case, segmenting of the PUSCH may be controlled based on at least one of a DL symbol(s) and a slot-boundary. In a case where a symbol(s) notified as a DL symbol(s) is included in the symbols to which the PUSCH is allocated, the UE performs such control as not to use the symbol(s) for the PUSCH transmission.

In a case where the certain field in the DCI is a second value (for example, 1), this may indicate that the invalid symbol pattern notified by the first higher layer parameter is applied. In this case, the UE controls transmissions of the PUSCH by taking the invalid symbol pattern information into account. For example, the UE performs such control as not to use the DL symbol(s) and the symbol(s) notified as an invalid symbol(s) for the PUSCH transmissions. In this case, segmenting of the PUSCH may be controlled based on at least one of the DL symbol(s), the invalid symbol pattern, and a slot-boundary. The UE performs such control as to use the symbols other than the DL symbol(s) and symbols notified as the invalid symbol(s) among the symbols to which the PUSCH is allocated, to perform the PUSCH transmissions.

In a case where addition of an additional bit(s) (or a certain field) indicating presence/absence of application of the invalid symbol pattern to the DCI is not indicated by the second higher layer parameter or where the UE is not notified of the second higher parameter, the UE may apply the invalid symbol pattern.

Note that the first higher layer parameter may be any information as long as being information for indication of a symbol pattern invalid for PUSCH transmissions and may be on a bitmap basis, for example. A mechanism applied to indication of a pattern of rate match patten (rateMatchPattern) in the time domain for a PDSCH may be applied to the first higher layer parameter.

As described above, by notifying the UE of invalid symbol pattern information by using the DCI or the like in a dynamic grant-based PUSCH, it is possible to dynamically notify the UE of allocation of the PUSCH even in a case of applying repeated transmissions of type B.

It is assumed that PUSCH transmission using repetition type B is also supported for configured grant-based PUSCH transmission in addition to the dynamic grant-based PUSCH transmission.

### <Configured Grant-based Transmission (Type 1 and Type 2)>

For UL transmission in NR, dynamic grant-based transmission and configured grant-based transmission are studied.

The dynamic grant-based transmission is a method of performing UL transmission by using an uplink shared channel (for example, PUSCH (Physical Uplink Shared Channel)), based on a dynamic UL grant (dynamic grant).

The configured grant-based transmission is a method of performing UL transmission by using an uplink shared channel (for example, a PUSCH), based on a UL grant (which may be referred to as a configured grant, a configured UL grant, and the like, for example) configured by a higher layer. Since a UL resource is already allocated to the UE and the UE can autonomously perform UL transmission by using the configured resource, in the configured grant-based transmission, realization of low latency communication can be expected.

The dynamic grant-based transmission may be referred to as a dynamic grant-based PUSCH, UL transmission with dynamic grant, a PUSCH with dynamic grant, UL transmission with UL grant, UL grant-based transmission, UL transmission scheduled by a dynamic grant (configured with a transmission resource), and the like.

The configured grant-based transmission may be referred to as a configured grant-based PUSCH, UL transmission with configured grant, a PUSCH with configured grant, UL transmission without UL grant, UL grant-free transmission, UL transmission scheduled by a configured grant (configured with a transmission resource), and the like.

The configured based transmission may be defined as a kind of UL semi-persistent scheduling (SPS). In the present disclosure, "configured grant" may be interpreted as "SPS," "SPS/configured grant," and the like, and vice versa.

Several types (type 1, type 2, and the like) are studied for the configured grant-based transmission.

In configured grant type 1 transmission, a parameter (which may be referred to as a configured grant-based transmission parameter, a configured grant parameter, and the like) used for configured grant-based transmission is configured for the UE by using higher layer signaling only.

In configured grant type 2 transmission, a configured grant parameter is configured for the UE through higher layer signaling. In configured grant type 2 transmission, the UE may be notified of at least part of configured grant parameters through physical layer signaling (for example, downlink control information (DCI) for activation to be described later).

Here, for example, the higher layer signaling may be any one or combinations of RRC (Radio Resource Control) signaling, MAC (Medium Access Control) signaling, broadcast information, and the like.

For example, the MAC signaling may use MAC control elements (MAC CE), MAC PDUs (Protocol Data Units), and the like. The broadcast information may be, for example, a master information block (MIB), a system information block (SIB), minimum system information (Remaining Minimum System Information (RMSI)), other system information (OSI), or the like.

The configured grant parameter may be configured for the UE by using a ConfiguredGrantConfig information element of RRC. The configured grant parameter may include information identifying a configured grant resource, for example. The configured grant parameter may include information related to the index of a configured grant, a time offset, periodicity, the number of repeated transmissions of a transport block (TB) (the number of repeated transmissions may be expressed as K), a redundancy version (RV) sequence used for repeated transmissions, the above-mentioned timer, and the like, for example.

Here, each of the periodicity and the time offset may be expressed in a unit of symbol, slot, subframe, frame, or the like. The periodicity may be indicated by a certain number of symbols, for example. The time offset may be indicated by an offset with respect to timing of a certain index (slot number = 0 and/or system frame number = 0, or the like), for example. The number of repeated transmissions may be any integer and may be one, two, four, eight, or the like, for example. In a case where the number of repeated transmissions is n (> 0), the UE may use n transmission occasions to perform configured grant-based PUSCH transmission on a certain TB.

In a case where the UE is configured with configured grant type 1 transmission, the UE may determine that one or a plurality of configured grants are triggered. The UE may use a configured resource (which may be referred to as a configured grant resource, a transmission occasion, and the like) for configured grant-based transmission to perform PUSCH transmission. Note that, even in a case where the UE is configured with configured grant-based transmission, the UE may skip the configured grant-based transmission when no data is stored in a transmission buffer.

In a case where the UE is configured with configured grant type 2 transmission and notified of a certain activation signal, the UE may determine that one or a plurality of configured grants are triggered (or activated). The certain activation signal (DCI for activation) may be DCI (PDCCH) CRC (Cyclic Redundancy Check)-scrambled with a certain identifier (for example, a CS-RNTI (Configured Scheduling RNTI)). Note that the DCI may be used for control of deactivation of a configured grant, retransmission, and the like.

The UE may determine whether or not to perform PUSCH transmission by using a configured grant resource configured by a higher layer, based on the certain activation signal. The UE may release (which may also be referred to as deactivate and the like) the resource (PUSCH) corresponding to the configured grant, based on the DCI deactivating a configured grant or expiration of a certain timer (after the elapse of a certain time period).

Note that, even in a case where the configured grant-based transmission is activated (in an active state), the UE may skip the configured grant-based transmission when no data is stored in the transmission buffer.

Note that each of the dynamic grant and the configured grant may be referred to as an actual UL grant. In other words, the actual UL grant may be higher layer signaling (for example, a ConfiguredGrantConfig information element of RRC) or physical layer signaling (for example, the certain activation signal), or a combination of these.

As described above, in a configured grant-based case, dynamic scheduling by DCI is not performed. For this reason, in a case of performing indication of invalid symbol pattern information, how to control configured grant-based PUSCH transmission (for example, configured grant-based PUSCH repeated transmission type B) is a problem.

For example, how to control application or indication of invalid symbol pattern information for type 1 configured grant-based PUSCH transmission not using DCI (for example, not performing activation by the DCI) is a problem. Alternatively, how to control application or indication of invalid symbol pattern information for type 2 configured grant-based PUSCH transmission using DCI to perform activation is a problem.

The inventors of the present invention studied a method of applying invalid symbol pattern information to configured grant-based PUSCH transmission (for example, repetition type B) not dynamically scheduled by DCI and came up with the idea of the present embodiments.

Embodiments according to the present disclosure will be described in detail with reference to the drawings as follows. The radio communication methods according to respective embodiments may each be employed individually, or may be employed in combination. Note that, although description will be given by using configured grant-based PUSCH repeated transmissions as an example in the following description, this is not restrictive. The embodiments may be applied to configured grant-based PUSCH transmission to which repeated transmissions are not applied.

### (First Aspect)

In a first aspect, description will be given of an example of a method of applying invalid symbol pattern information for configured grant type 2 in which activation or deactivation is controlled by DCI.

A UE may control application of invalid symbol pattern information, based on at least one of information (for example, first information) related to an invalid symbol pattern, information (for example, second information) related to presence/absence of configuration of a certain field for indication of presence/absence of the application of the invalid symbol pattern, and information (for example, third information) for indication of presence/absence of application of the invalid symbol pattern.

The UE may be notified of at least one of the information (for example, the first information) related to the invalid symbol pattern and the information (for example, the second information) related to presence/absence of the configuration of the certain field for indication of presence/absence of the application of the invalid symbol pattern, by the base station by using higher layer signaling. The UE may be notified of the information (for example, the third information) for indication of presence/absence of application of the invalid symbol pattern, by the base station by using DCI.

The DCI may be DCI indicating configured grant-based activation. The DCI may be a certain DCI format (for example, at least one of DCI formats 0_1 and 0_2).

For example, in a case where the UE applies the invalid symbol pattern, each transmission (for example, segmentation) of a PUSCH may be controlled by using the symbols obtained by excluding a symbol(s) notified as an invalid symbol(s) and a DL symbol(s). Note that the information (also referred to as a slot format) related to a transmission direction of each symbol (for example, U, D, or F of each symbol) may be transmitted from the base station to the UE by using at least one of higher layer signaling and DCI.

The UE may adopt at least one of options 1-1 to 1-4 below to control presence/absence of application of the invalid symbol pattern information for PUSCH transmission.

### <Option 1-1>

In a case where application of the invalid symbol pattern is indicated by DCI, the UE may perform such control as to apply the invalid symbol pattern only to a certain PUSCH transmission among a plurality of configured grant-based PUSCH transmissions. The certain PUSCH transmission may be determined based on the number of transmissions or a transmission order. For example, the certain PUSCH transmission may be the first PUSCH transmission. The first PUSCH transmission may be one PUSCH transmission of repeated transmissions (K) or may be the entire repeated transmissions (for example, K PUSCH transmissions) transmitted first.

An example of UE operations in a case of presence/absence of indication or configuration of first higher layer signaling for indication of the first information, second higher layer signaling for indication of the second information, and DCI for indication of the third information will be described below.

### [With Configuration of First Higher Layer Parameter]

In this case, in a case where a configured grant PUSCH of type 2 is activated by a certain DCI format and a certain field for the invalid symbol pattern information is configured in the DCI, the UE determines whether or not to apply the invalid symbol pattern, based on a certain field in the DCI. Whether or not the certain field for the invalid symbol pattern information is configured in the DCI may be notified/configured by the second higher layer parameter.

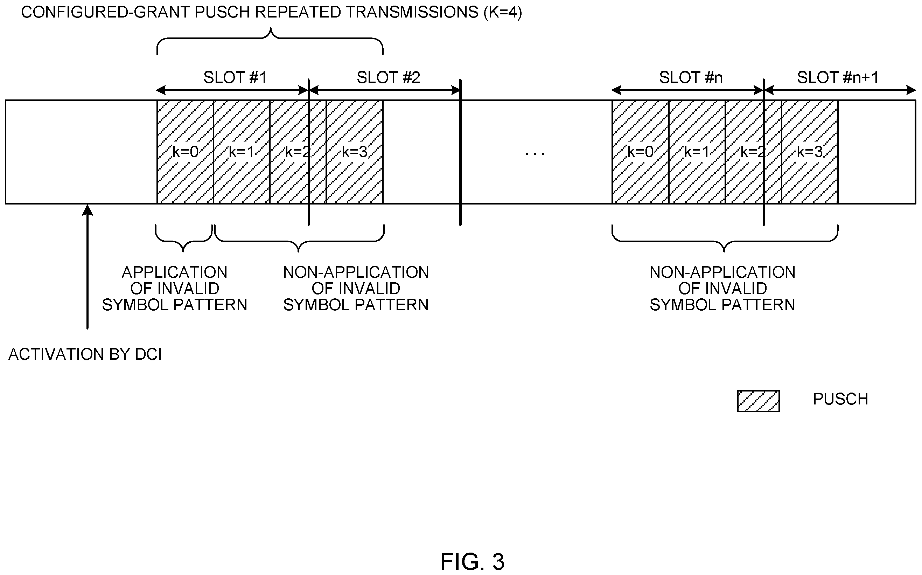

Assume a case where application of the invalid symbol pattern notified by the first higher layer parameter is notified through the certain field of the DCI (for example, the certain field has a second value (for example, 1)). In this case, the UE applies invalid symbol pattern information to a certain PUSCH (refer to FIG. 3).

FIG. 3 shows a case of performing such control that the invalid symbol pattern is applied only to the first PUSCH transmission (k = 0 in slot #1) while the invalid symbol pattern is not applied to the other PUSCH transmissions (refer to FIG. 3). In this case, the UE performs, for the first PUSCH transmission (k = 0 in slot #1), PUSCH transmission (segmentation if necessary) by using symbols obtained by excluding a symbol(s) (for example, a flexible symbol(s)) notified as an invalid symbol(s) and a DL symbol(s). The UE also performs, for other PUSCH transmissions, PUSCH transmissions (segmentation if necessary) by using symbols obtained by excluding the DL symbol(s).

Note that, although the invalid symbol pattern is applied only to the first PUSCH transmission in this example, this is not restrictive, and the invalid symbol pattern may be applied to one or some of the PUSCH transmissions.

In other cases, the UE may perform such control as not to apply the invalid symbol pattern information to a PUSCH transmission(s) (a PUSCH transmission(s) including a certain PUSCH transmission). The other cases may be a case where non-application of the invalid symbol pattern notified by the first higher layer parameter is notified through the certain field of the DCI (for example, the certain field has a first value (for example, 0)).

In a case where a configured grant PUSCH of type 2 is activated by a certain DCI format and a certain field for the invalid symbol pattern information is not configured in the DCI, the UE may determine whether or not to apply the invalid symbol pattern, irrespective of a certain field in the DCI. In this case, the UE may perform such control as to apply the invalid symbol pattern information to PUSCH transmissions (other PUSCH transmissions in addition to a certain PUSCH transmission).

Whether or not the certain field for the invalid symbol pattern information is configured in the DCI may be notified/configured by the second higher layer parameter. In a case where the UE is not notified of the second higher layer parameter, the UE may determine that the certain field for the invalid symbol pattern information is not configured in the DCI.

### [Without Configuration of First Higher Layer Parameter]

The UE may perform such control as not to apply the invalid symbol pattern information to a PUSCH transmission(s) (a PUSCH transmission(s) including a certain PUSCH transmission).

As described above, in the case where application of the invalid symbol pattern is notified through DCI, it is possible, by limiting a PUSCH transmission(s) to which the invalid symbol pattern is applied to one or some PUSCHs, to flexibly control application of the invalid symbol pattern for configured grant-based PUSCH transmissions.

### <Option 1-2>

In a case where application of the invalid symbol pattern is indicated by DCI, the UE may perform such control as to apply the invalid symbol pattern to a plurality of configured grant-based PUSCH transmissions.

An example of UE operations in a case of presence/absence of indication or configuration of the first higher layer signaling for indication of the first information, the second higher layer signaling for indication of the second information, and the DCI for indication of the third information will be described below.

### [With Configuration of First Higher Layer Parameter]

In this case, in a case where a configured grant PUSCH of type 2 is activated by a certain DCI format and a certain field for the invalid symbol pattern information is configured in the DCI, the UE determines whether or not to apply the invalid symbol pattern, based on a certain field in the DCI. Whether or not the certain field for the invalid symbol pattern information is configured in the DCI may be notified/configured by the second higher layer parameter.

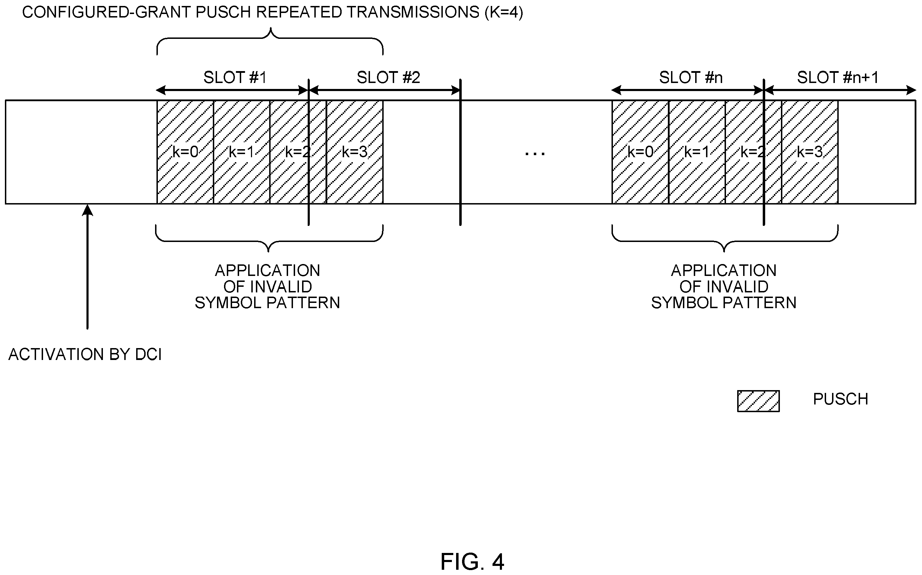

Assume a case where application of the invalid symbol pattern notified by the first higher layer parameter is notified through the certain field of the DCI (for example, the certain field has a second value (for example, 1)). In this case, the UE applies the invalid symbol pattern information to the configured grant-based PUSCH transmissions (refer to FIG. 4).

FIG. 4 shows a case where the invalid symbol pattern is applied to configured grant-based PUSCHs transmitted after activation (refer to FIG. 4). Note that the invalid symbol pattern may also be applied to the remaining PUSCH transmissions in addition to the first PUSCH transmission (for example, k = 0 in slot #1) in this example. In this case, the UE performs, for each of the PUSCH transmissions, PUSCH transmission (segmentation if necessary) by using symbols obtained by excluding a symbol(s) (for example, a flexible symbol(s)) notified as an invalid symbol(s) and a DL symbol(s).

In other cases, the UE may perform such control as not to apply the invalid symbol pattern information to each of the PUSCH transmissions. The other cases may be a case where non-application of the invalid symbol pattern notified by the first higher layer parameter is notified through the certain field of the DCI (for example, the certain field has a first value (for example, 0)).

In a case where a configured grant PUSCH of type 2 is activated by a certain DCI format and a certain field for the invalid symbol pattern information is not configured in the DCI, the UE may determine whether or not to apply the invalid symbol pattern, irrespective of a certain field in the DCI. In this case, the UE may perform such control as to apply the invalid symbol pattern information to the configured grant-based PUSCH transmissions.

Whether or not the certain field for the invalid symbol pattern information is configured in the DCI may be notified/configured by the second higher layer parameter. In a case where the UE is not notified of the second higher layer parameter, the UE may determine that the certain field for the invalid symbol pattern information is not configured in the DCI.

### [Without Configuration of First Higher Layer Parameter]

The UE may perform such control as not to apply the invalid symbol pattern information to the PUSCH transmissions.

As described above, in the case where application of the invalid symbol pattern is notified through DCI, it is possible, by limiting a PUSCH transmission(s) to which the invalid symbol pattern is applied to one or some PUSCHs, to flexibly control application of the invalid symbol pattern for configured grant-based PUSCH transmissions.

### <Option 1-3>

The UE may control configured grant-based PUSCH transmissions of type 2, based on information related to the invalid symbol pattern notified through higher layer signaling. Specifically, in a case where the UE is notified of or configured with the information related to the invalid symbol pattern by a higher layer parameter, the UE may apply the invalid symbol pattern to all the configured grant-based PUSCH transmissions of type 2.

On the other hand, in a case where the UE is not notified of the information related to the invalid symbol pattern, the UE may control the PUSCH transmissions by assuming that the invalid symbol pattern information is not applied to the PUSCH transmissions. As described above, by determining whether or not to apply the invalid symbol pattern, based on presence/absence of configuration of invalid symbol pattern information by the higher layer parameter, it is possible to eliminate the necessity of indication of presence/absence of application of invalid symbol pattern information by DCI and indication (for example, the second higher layer parameter) of presence/absence of configuration of a certain field in DCI.

### <Option 1-4>

The UE may perform such control as not to apply the invalid symbol pattern notified through higher layer signaling to a configured grant-based PUSCH of type 2 (for example, ignore the invalid symbol pattern). The invalid symbol pattern notified through higher layer signaling may be an invalid symbol pattern for at least one of a dynamic grant-based PUSCH and a configured grant-based PUSCH of type 1.

In this case, the UE may transmit a configured grant-based PUSCH of type 2 by using an invalid symbol(s) notified by a higher layer parameter. In this case, the invalid symbol pattern may be applied only to at least one of a dynamic grant-based PUSCH and a configured grant-based PUSCH of type 1.

### <Dynamic Grant-based and Configured Grant-based>

A higher layer parameter(s) (for example, the first higher layer parameter) used for indication or configuration of the invalid symbol pattern information may be configured separately for dynamic grant-based and type 2 configured grant-based. In this case, separate invalid symbol patterns (for example, different invalid symbol patterns) may be applied to dynamic grant-based PUSCH transmission and configured grant-based PUSCH transmission.

The base station can separately configure information related to an invalid symbol pattern for a dynamic grant-based PUSCH and a configured grant-based PUSCH and can hence flexibly schedule or configure PUSCH transmissions. Note that the first higher layer parameter may be separately notified or configured for each of a configured grant-based PUSCH of type 1 and a configured grant-based PUSCH of type 2.

A higher layer parameter (the second higher layer parameter) used for indication of presence/absence of configuration of a certain field in DCI for indication of presence/absence of application of the invalid symbol pattern may also be separately configured for dynamic grant-based and configured grant-based. Alternatively, the second higher layer parameter may be configured commonly for dynamic grant-based and configured grant-based.

Alternatively, the first higher layer parameter used for indication or configuration of the invalid symbol pattern information may be configured commonly for dynamic grant-based and type 1 configured grant-based. In this case, the same invalid symbol pattern may be applied to dynamic grant-based PUSCH transmissions and configured grant-based PUSCH transmissions.

The base station can commonly configure information related to the invalid symbol pattern for a dynamic grant-based PUSCH and a configured grant-based PUSCH and can hence suppress an increase of signaling overhead. The UE can commonly apply the single invalid symbol pattern to PUSCHs of different types and can hence suppress an increase of load in PUSCH transmission processing. Note that the first higher layer parameter may also be commonly notified or configured for a configured grant-based PUSCH of type 1 and a configured grant-based PUSCH of type 2.

The second higher layer parameter used for indication of presence/absence of configuration of a certain field in DCI for indication of presence/absence of application of the invalid symbol pattern may also be commonly configured for dynamic grant-based and configured grant-based. Alternatively, the second higher layer parameter may be configured separately for dynamic grant-based and configured grant-based.

Note that, although the above description illustrates the case where presence/absence of application of the invalid symbol pattern notified through first higher layer signaling is indicated to the UE by using the certain field included in DCI, this is not restrictive. For example, the invalid symbol pattern may be specified in a case where application of the invalid symbol pattern is indicated by using the DCI. For example, a plurality of candidates for the invalid symbol pattern may be configured through first higher layer signaling, and a certain candidate may be specified by using the DCI. In this way, it is possible to flexibly specify an invalid symbol pattern.

### (Second Aspect)

In a second aspect, a description will be given of a method of applying invalid symbol pattern information for configured grant type 1 configured through higher layer signaling (or not using DCI).

In a configured grant-based PUSCH of type 1, transmission is controlled without using DCI for activation or scheduling of the PUSCH. For this reason, at least for a configured grant-based PUSCH transmission of type 1, the necessity of indication of presence/absence of application of invalid symbol pattern information by DCI and indication (for example, the second higher layer parameter) of presence/absence of configuration of a certain field in DCI may be eliminated.

The information related to the invalid symbol pattern notified through higher layer signaling may have a configuration (option 2-1) not applied or may have a configuration (option 2-2) applied to a configured grant-based PUSCH of type 1.

### <Option 2-1>

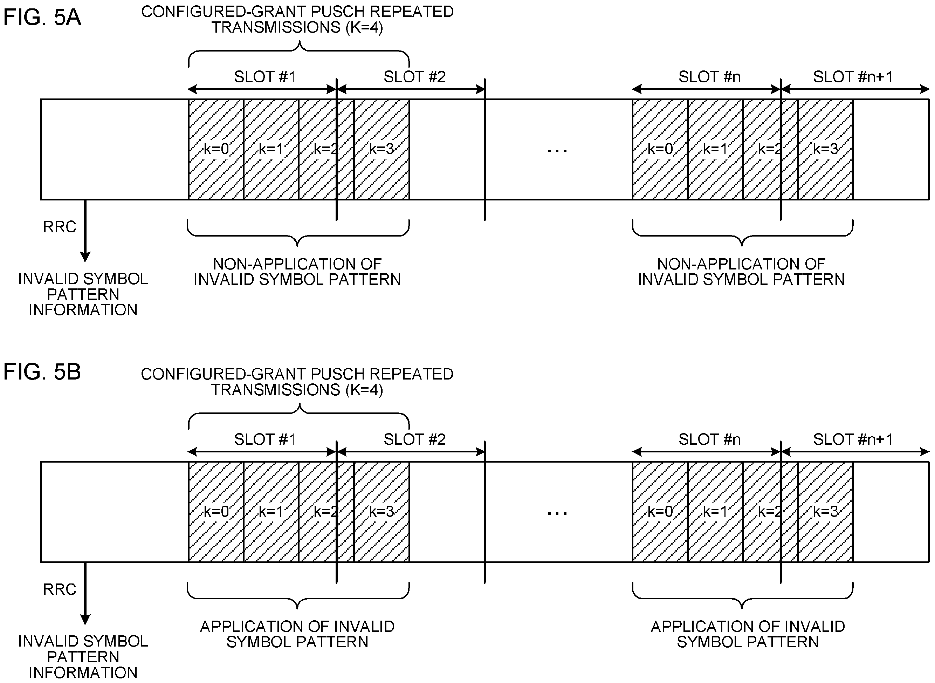

The UE may perform such control as not to apply the invalid symbol pattern notified through higher layer signaling to a configured grant-based PUSCH of type 1 (for example, ignore the invalid symbol pattern) (refer to FIG. 5A). The invalid symbol pattern notified through higher layer signaling may be an invalid symbol pattern for at least one of a dynamic grant-based PUSCH and a configured grant-based PUSCH of type 2.

In this case, the UE may transmit a configured grant-based PUSCH of type 1 by using an invalid symbol(s) notified by a higher layer parameter or an invalid symbol(s) indicated by DCI (for example, DCI for activation of a configured grant PUSCH). In this case, the invalid symbol pattern may be applied only to one of a dynamic grant-based PUSCH and a configured grant-based PUSCH of type 2.

### <Option 2-2>

The UE may control configured grant-based PUSCH transmissions of type 1, based on information related to the invalid symbol pattern notified through higher layer signaling (refer to FIG. 5B). Specifically, in a case where the UE is notified of or configured with the information related to the invalid symbol pattern by a higher layer parameter, the UE may apply the invalid symbol pattern to all the configured grant-based PUSCH transmissions of type 1 (for example, perform such control not to perform PUSCH transmissions using an invalid symbol(s)).

On the other hand, in a case where the UE is not notified of the information related to the invalid symbol pattern, the UE may control the PUSCH transmissions by assuming that the invalid symbol pattern information is not applied to the PUSCH transmissions.

### <Dynamic Grant-based and Configured Grant-based>

A higher layer parameter(s) (for example, the first higher layer parameter) used for indication or configuration of the invalid symbol pattern information may be configured separately for dynamic grant-based and type 1 configured grant-based. In this case, separate invalid symbol patterns (for example, different invalid symbol patterns) may be applied to dynamic grant-based PUSCH transmissions and configured grant-based PUSCH transmissions.

The base station can separately configure information related to an invalid symbol pattern for a dynamic grant-based PUSCH and a configured grant-based PUSCH and can hence flexibly schedule or configure PUSCH transmissions. Note that the first higher layer parameter may be separately notified or configured for each of a configured grant-based PUSCH of type 1 and a configured grant-based PUSCH of type 2.

Alternatively, the first higher layer parameter used for indication or configuration of the invalid symbol pattern information may be configured commonly for dynamic grant-based and type 1 configured grant-based. In this case, the same invalid symbol pattern may be applied to dynamic grant-based PUSCH transmissions and configured grant-based PUSCH transmissions.

The base station can commonly configure information related to the invalid symbol pattern for a dynamic grant-based PUSCH and a configured grant-based PUSCH and can hence suppress an increase of signaling overhead. The UE can commonly apply the single invalid symbol pattern to PUSCHs of different types and can hence suppress an increase of load in PUSCH transmission processing. Note that the first higher layer parameter may also be commonly notified or configured for a configured grant-based PUSCH of type 1 and a configured grant-based PUSCH of type 2.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

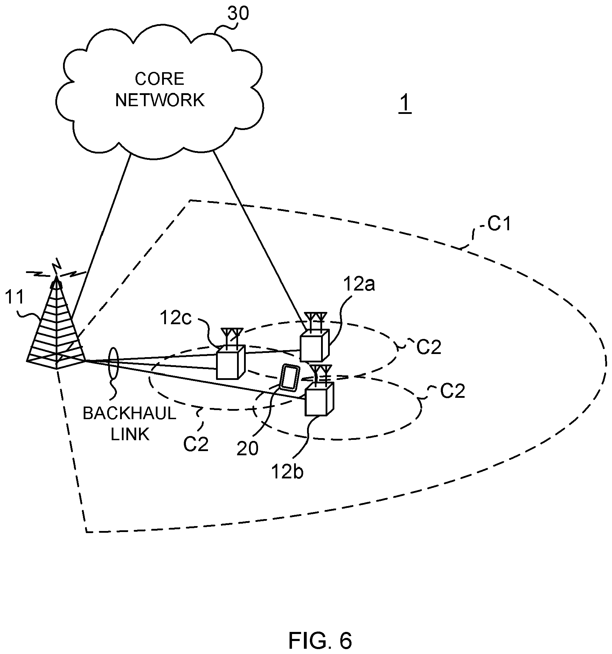

FIG. 6 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

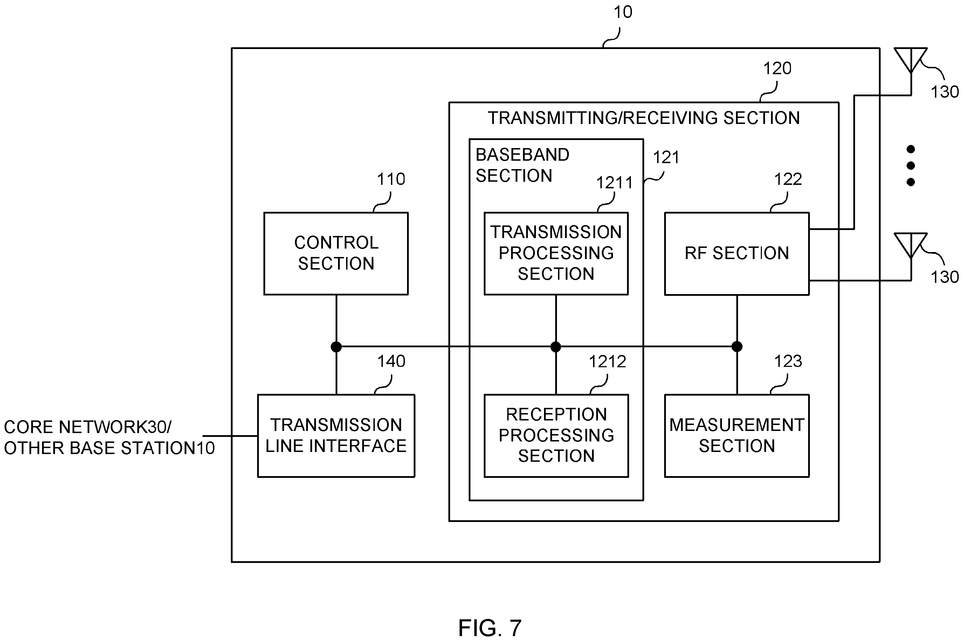

FIG. 7 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit at least one of first information related to an invalid symbol pattern for transmission of an uplink shared channel, second information indicating whether or not an indication field for presence/absence of application of the first information is configured in downlink control information, and an indication field included in the downlink control information.

The control section 110 may control reception of a configured grant-based uplink shared channel for which transmission is controlled based on at least one of the first information, the second information, and the indication field included in the downlink control information.

### (User Terminal)

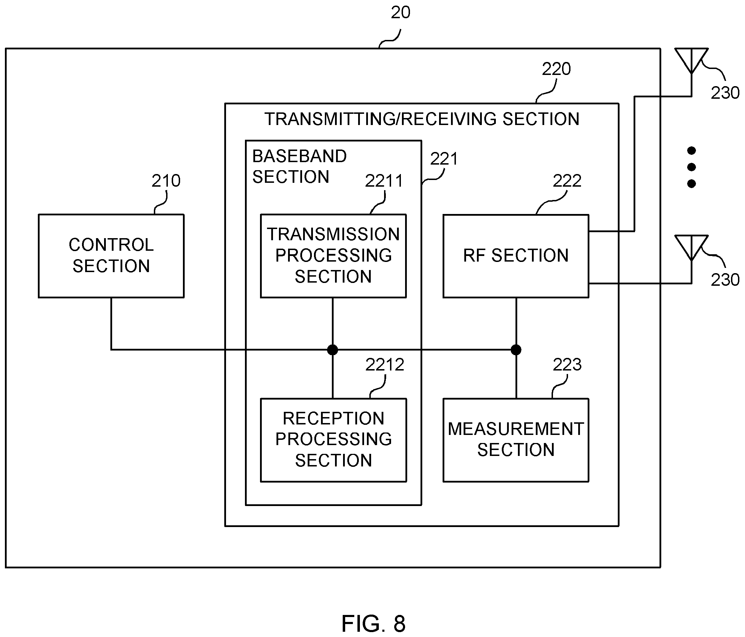

FIG. 8 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive at least one of first information related to an invalid symbol pattern for transmission of an uplink shared channel, second information indicating whether or not an indication field for presence/absence of application of the first information is configured in downlink control information, and an indication field included in the downlink control information.

The control section 210 controls transmission of a configured grant-based uplink shared channel, based on at least one of the first information, the second information, and the indication field included in the downlink control information.

In a case where activation of the configured grant-based uplink shared channel is indicated by the downlink control information including an indication field indicating application of the first information, the control section 210 may apply an invalid symbol pattern to at least one or some uplink shared channel transmissions among a plurality of transmissions of a configured grant-based uplink shared channel.

In a case of receiving the first information, the control section 210 may apply the invalid symbol pattern to the transmission of the configured grant-based uplink shared channel irrespective of the second information and the indication field in the downlink control information.

The control section 210 may control application of the invalid symbol pattern separately for configured grant-based uplink shared channel transmission of type 1 and configured grant-based uplink shared channel transmission of type 2.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

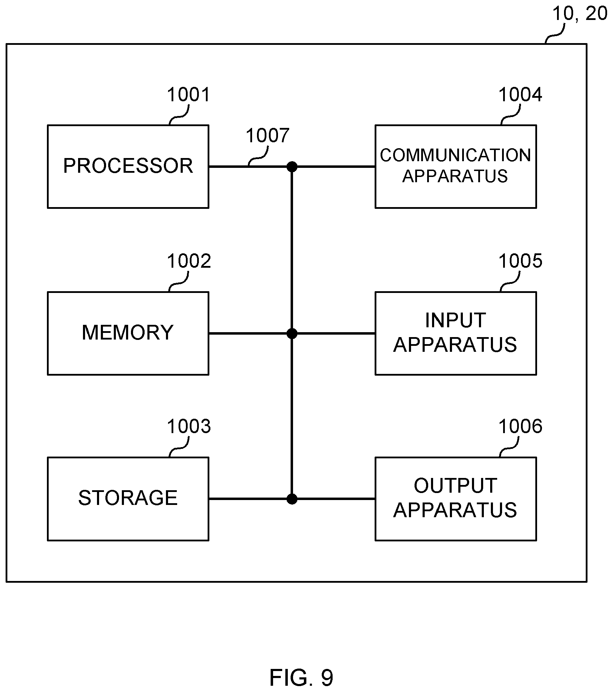

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight), " "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives at least one of first information related to an invalid symbol pattern for transmission of an uplink shared channel, second information indicating whether or not an indication field for presence/absence of application of the first information is configured in downlink control information, and the indication field included in the downlink control information; and
a control section that controls transmission of a configured grant-based uplink shared channel, based on at least one of the first information, the second information, and the indication field included in the downlink control information.

2. The terminal according to claim 1, wherein
in a case where activation of the configured grant-based uplink shared channel is indicated by the downlink control information including the indication field indicating application of the first information, the control section applies the invalid symbol pattern to at least one or some uplink shared channel transmissions among a plurality of transmissions of a configured grant-based uplink shared channel.

3. The terminal according to claim 1, wherein
in a case of receiving the first information, the control section applies the invalid symbol pattern to the transmission of the configured grant-based uplink shared channel irrespective of the second information and the indication field in the downlink control information.

4. The terminal according to any one of claims 1 to 3, wherein
the control section controls application of the invalid symbol pattern separately for configured grant-based uplink shared channel transmission of type 1 and configured grant-based uplink shared channel transmission of type 2.

5. A radio communication method comprising:
receiving at least one of first information related to an invalid symbol pattern for transmission of an uplink shared channel, second information indicating whether or not an indication field for presence/absence of application of the first information is configured in downlink control information, and the indication field included in the downlink control information; and
controlling transmission of a configured grant-based uplink shared channel, based on at least one of the first information, the second information, and the indication field included in the downlink control information.

6. A base station comprising:
a transmitting section that transmits at least one of first information related to an invalid symbol pattern for transmission of an uplink shared channel, second information indicating whether or not an indication field for presence/absence of application of the first information is configured in downlink control information, and the indication field included in the downlink control information; and
a control section that controls reception of a configured grant-based uplink shared channel for which transmission is controlled based on at least one of the first information, the second information, and the indication field included in the downlink control information.
